# EUROPÄISCHE PATENTSCHRIFT

(11) **EP 1 304 927 B1**
(45) Veröffentlichungstag und Bekanntmachung des Hinweises auf die Patenterteilung: **14.09.2005**
(21) Anmeldenummer: 01956318.8
(22) Anmeldetag: 19.07.2001
(51) Int. Cl.: A22C 17/12, B26D 7/26

(54) **KLINGENHALTEVORRICHTUNG**
BLADE MOUNTING DEVICE
DISPOSITIF DE SUPPORT D'OUTIL DE COUPE

(30) Priorität: 03.08.2000 DE 10038579
(43) Veröffentlichungstag der Anmeldung: 02.05.2003
(73) Patentinhaber: Maja-Maschinenfabrik Hermann Schill GmbH & Co. KG, 77694 Kehl-Goldscheuer (DE)
(72) Erfinder: SCHILL, Joachim, 77694 Kehl (DE)
(74) Vertreter: Lucht, Silvia
(86) Internationale Anmeldenummer: PCT/DE2001/002648
(87) Internationale Veröffentlichungsnummer: WO 2002/011546

(56) Entgegenhaltungen:
- EP-A- 0 437 873
- GB-A- 2 182 881
- US-A- 3 496 823
- US-A- 5 494 478

## Beschreibung

Die Erfindung geht aus von einer Klingenhaltevorrichtung nach dem Oberbegriff des Anspruchs 1.

Derartige Klingenhaltevorrichtungen werden insbesondere für Enthäutungs- und Abschwartungsmaschinen in der Fleisch-, Fisch- und Geflügelverarbeitung eingesetzt. Zum Entfernen von Haut- oder Schwarte wird das Behandlungsgut gegen eine Klinge gedrückt und relativ zur Klinge bewegt. Dabei ist die Klinge zwischen einem Klingenbalken einerseits und einer Halteleiste andererseits eingespannt. Der Klingenbalken ist an einer Klingenhalteraufhängung befestigt, welche in die Maschine, insbesondere eine Enthäutungs- oder Abschwartungsmaschine eingesetzt wird.

Um die Klinge zwischen dem Klingenbalken und der Halteleiste zu halten und ein Verschieben derselben zu verhindern, werden Klingenbalken und Halteleiste zusammengepreßt. Hierzu sind aus dem Stand der Technik Schraubverbindungen bekannt. Diese haben den Nachteil, daß zum Entfernen der Klinge oder zur Reinigung der Zwischenräume zwischen Klinge, Klingenbalken und Halteleiste, die gesamte Klingenhaltevorrichtung aus der Maschine ausgebaut werden muß, da die Schrauben ansonsten nicht zugänglich sind. Darüberhinaus hat das mehrmalige Öffnen und Schließen der Schraubverbindung den Verschleiß der Gewinde zur Folge. Außerdem ist bei unterschiedlich stark angezogenen Schrauben über die gesamte Länge der Klinge die durch die Halteleiste auf die Klinge ausgeübte Kraft unterschiedlich.

Aus der DE 690 13 138 T2 ist eine Messerhaltevorrichtung bekannt, bei der die Halteleiste mit Ausnehmungen in aus der Oberfläche des Klingenbalkens herausragende Schraubenköpfe eingreift. Durch eine Nockeneinrichtung werden Klingenbalken und Halteleiste an der der Klinge abgewandten Seite auseinandergedrückt. Dies führt dazu, daß Klingenbalken und Halteleiste im Bereich der Klinge zusammengepreßt werden. Dadurch wird die Klinge fixiert. Eine Schraubverbindung zwischen Klingenbalken und Halteleiste entfällt dadurch. Als nachteilig erweist sich bei dieser Vorrichtung, daß die auf die Klinge durch die Halteleiste ausgeübte Kraft punktuell im Bereich der Schrauben größer ist als in den übrigen Bereichen. Darüberhinaus besteht der Nachteil, daß zum Entfernen oder Reinigen der Klinge und der Zwischenräume zwischen Klinge, Klingenbalken und Halteleiste die gesamte Halteleiste von der Klingenhaltevorrichtung abgenommen und an einem anderen Ort abgelegt werden muß. Sie kann nicht an der Halteleiste verbleiben. Beim erneuten Aufsetzen der Halteleiste auf den Klingenbalken müssen die Ausnehmungen mit den Schraubenköpfen zur Deckung gebracht werden. Dieser Bereich ist jedoch beim Auflegen nicht einsehbar. Wird die Halteleiste nicht exakt aufgesetzt, so können die Kanten der Ausnehmung beschädigt werden. Dies kann dazu führen, daß beim Verspannen von Halteleiste und Klingenbalken keine ausreichenden Kräfte zum Festklemmen der Klinge aufgebracht werden können.

### Die Erfindung und ihre Vorteile

Demgegenüber hat die erfindungsgemäße Klingenhaltevorrichtung mit den kennzeichnenden Merkmalen des Anspruchs 1 den Vorteil, daß Klingenbalken und Halteleiste über ihre gesamte Breite ineinander eingreifen und miteinander verspannt werden. Hierzu ist in dem Klingenbalken und in der Halteleiste jeweils ein schwalbenschwanzartiger Absatz vorgesehen. Dieser verläuft parallel zu den an der Klinge anliegenden Vorderkanten von Klingenbalken und Halteleiste. Der schwalbenschwanzförmige Absatz ist hinter dem Bereich des Klingenbalkens und der Halteleiste vorgesehen, an welchem die Klinge anliegt. Damit beeinflußt der Absatz das Anlegen der Klinge nicht. Der Absatz wird gebildet durch eine Stufe in den einander zugewandten Oberflächen von Klingenbalken und Halteleiste. Die Stufe entsteht durch eine Fläche, welche unter einem spitzen Winkel gegen die beiden die Stufen bildenden Oberflächenteile von Klingenbalken und Halteleiste steht. Die schwalbenschwanzförmigen Absätze bilden damit jeweils einen Keil.

Als Spannvorrichtung dient eine Welle, welche mit ihren Enden exzentrisch in der Klingenhalteraufhängung und zentrisch in der Halteleiste gelagert ist. Zum Festspannen der Klinge greifen die schwalbenschwanzartigen Absätze von Klingenbalken und Halteleiste wie Keile ineinander ein und werden durch Rotation der exzentrisch gelagerten Welle gegeneinander verspannt. Beim Eingreifen der Absätze ineinander gleiten die Oberflächen von Klingenbalken und Halteleiste aufeinander und werden dabei ohne Zusatz exakt geführt. Die Rotation sorgt für eine Bewegung des Klingenbalkens und der Halteleiste zueinander, die exakt senkrecht zu den beiden Absätzen erfolgt. Ein Verkanten oder Beschädigen der Absätze beim Aufsetzen der Halteleiste auf den Klingenbalken und beim Festspannen ist damit nicht möglich.

Die Welle dient außerdem dem Abheben der Halteleiste vom Klingenbalken. Die Halteleiste muß nicht vollständig von der Klingenhaltevorrichtung abgenommen werden, sondern sie wird lediglich gegen den Klingenbalken verschwenkt. Das Lager für die Welle ist an der der Klinge abgewandten Seite der Halteleiste vorgesehen. Damit ist eine exakte Führung der Halteleiste relativ zum Klingenbalken auch beim Anheben gewährleistet. Eine Beschädigung des schwalbenschwanzförmigen Absatzes der Klinge oder sonstiger Teile der Klingenhaltevorrichtung wird damit verhindert. Die erfindungsgemäße Klingenhaltevorrichtung ist damit verschleißarm. Sie garantiert auch bei mehrmaligem Öffnen und Schließen der Spannvorrichtung ein gleichmäßiges und kräftiges Anpressen der Halteleiste an den Klingenbalken und damit an die Klinge.

Nach einer vorteilhaften Ausgestaltung der Erfindung ist als Betätigungsvorrichtung an der Welle ein Hebel vorgesehen. Dieser kann von Hand bedient werden. Zum Lösen und Spannen der Spannvorrichtung ist eine Rotation des Hebels um ca. 180 ° ausreichend. Damit der Hebel für den Benutzer leicht zugänglich ist, befindet er sich im Bereich eines Endes der Welle. Es können auch zwei Hebel vorgesehen sein, wobei sich jeder der beiden Hebel an einem Ende der Welle befindet. Die beiden Hebel können auch durch einen Griff miteinander verbunden sein.

Nach einer weiteren vorteilhaften Ausgestaltung der Erfindung ist die Welle in der Klingenhalteraufhängung axial verschiebbar gelagert. Das Lager an der Halteleiste für die Welle weist eine Ausnehmung zum Einhängen des Hebels auf. Somit sind mehrere Stellungen der Welle und des Hebels möglich. In einer ersten Einstellung wird der Hebel in die Ausnehmung des Lagers der Halteleiste eingehängt. Wird nun die Welle mit Hilfe des Hebels rotiert, so kann die Halteleiste vom Klingenbalken abgehoben oder auf diesen abgesenkt werden. Liegt die Halteleiste auf dem Klingenbalken auf, so wird die Welle so weit verschoben, daß der Hebel nicht mehr in die Ausnehmung des Lagers der Halteleiste eingreift. Eine anschließende Rotation der Welle mit Hilfe des Hebels führt zu einem Verspannen von der Halteleiste gegen den Klingenbalken.

Nach einer weiteren vorteilhaften Ausgestaltung der Erfindung ist an dem Klingenbalken entweder ein Anschlag für die Klinge vorgesehen, der sich über die gesamte Breite des Klingenbalkens erstreckt oder es sind mehrere Anschläge vorgesehen, die sich jeweils nur über einen Abschnitt des Klingenbalkens erstrecken. Als Anschläge dienen beispielsweise Leisten oder Scheiben. Es können zum Beispiel mehrere runde Scheiben gleichen Durchmessers kolinear auf den Klingenbalken aufgesetzt werden. Die Anschläge erleichtern das exakte Einlegen der Klinge. Vorteilhafterweise wird die Klinge so eingelegt, daß ihre Schneidkante parallel zu den Vorderkanten von Halteleiste und Klingenbalken verläuft. Um die Tiefe des Schnittes beeinflussen zu können, sind die Anschläge variabel. Werden mehrere runde Scheiben als Anschläge verwendet, so kann durch das Einsetzen von Scheiben unterschiedlichen Durchmessers die Position der Klinge relativ zum Klingenhalter verändert werden. Werden Leisten als Anschlag verwendet, so kann die Befestigung der Leiste am Klingenhalter ein Verschieben der Leiste ermöglichen.

Weitere Vorteile und vorteilhafte Ausgestaltungen der Erfindung sind der nachfolgenden Beschreibung, der Zeichnung und den Ansprüchen entnehmbar.

### Zeichnung

In der Zeichnung ist ein Ausführungsbeispiel einer erfindungsgemäßen Klingenhaltevorrichtung dargestellt und im folgenden näher beschrieben. Es zeigen:
- Fig. 1: Klingenhaltevorrichtung in einer Ansicht von oben,
- Fig. 2: Schnitt durch die Klingenhaltevorrichtung gem. Fig. 1 an der mit I markierten Stelle,
- Fig. 3: Schnitt durch die Klingenhaltevorrichtung gem. Fig. 1, an der mit II markierten Stelle,
- Fig. 4: Schnitt durch die Klingenhaltevorrichtung gem. Fig. 1, an der mit III markierten Stelle
- Fig. 5: Ausschnitt aus Figur 4, an der mit A markierten Stelle,
- Fig. 6: Klingenbalken und Halteleiste in vergrößerter Darstellung.

### Beschreibung des Ausführungsbeispiels

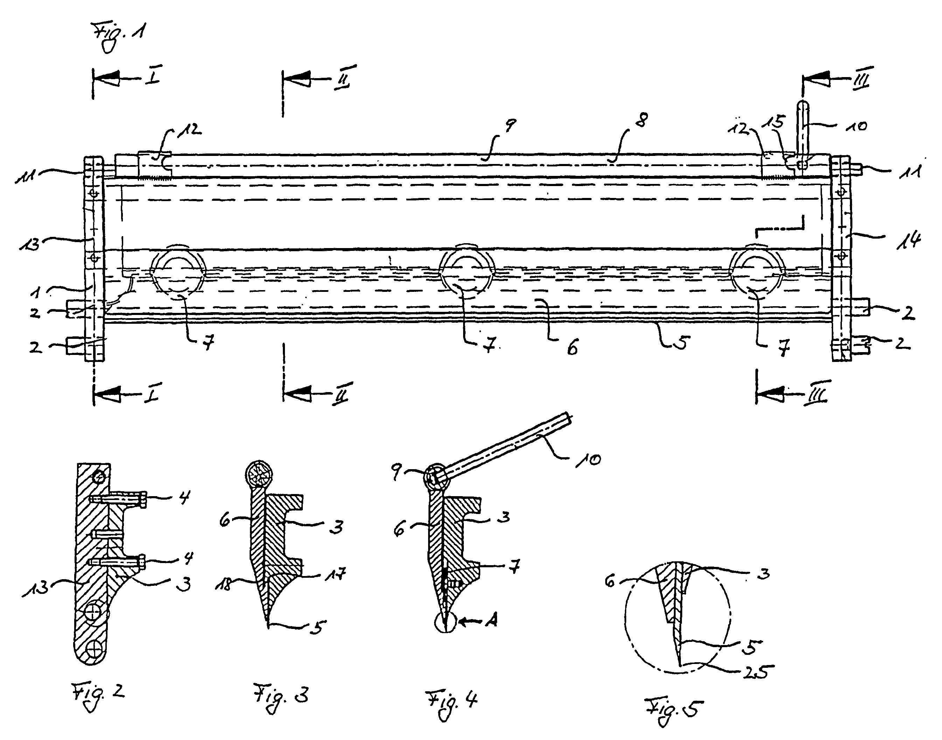

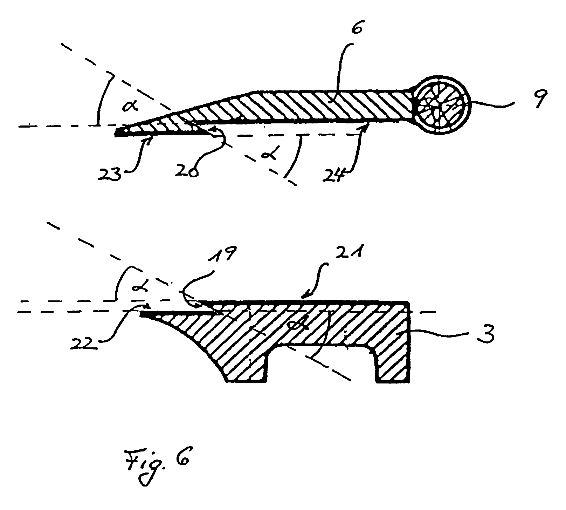

In den Figuren 1 bis 4 ist eine Klingehaltevorrichtung in einer Ansicht von oben und in verschiedenen Schnittebenen dargestellt. Eine Klingenhalteraufhängung 1 weist seitlich Zapfen 2 auf, mit denen die Klingenhaltevorrichtung in eine Enthäutungs- und Abschwartungsmaschine eingehängt werden kann. An der Klingenhalteraufhängung 1 ist, wie in Figur 2 erkennbar, ein Klingenbalken 3 über Schrauben 4 befestigt. Der Klingenbalken ist in Figur 1 nicht erkennbar, da er sich an der Unterseite der Klingenhaltevorrichtung befindet. Auf den Klingenbalken wird eine Klinge 5 aufgelegt, welche mit Hilfe einer Halteleiste 6 auf dem Klingenbalken festgespannt wird. Als Anschlag für die Klinge sind Scheiben 7 vorgesehen, an die die Klinge mit der der Schneidkante abgewandten Seite angelegt wird. Die Scheiben werden mit Hilfe einer Schraube, an der der Halteleiste zugewandten Oberfläche des Klingenbalkens angebracht. Die Scheiben 7 sind in Figur 1 lediglich gestrichelt dargestellt, da sie in dieser Ansicht durch den Betrachter nicht einsehbar sind. Sie können jedoch der Schnittdarstellung gem. Fig. 4 entnommen werden.

Zum Festspannen der Klinge 5 zwischen dem Klingenbalken 3 und der Halteleiste 6 dient eine Spannvorrichtung 8. Sie besteht im wesentlichen aus einer Welle 9 und einem Hebel 10. Die Welle 9 ist mit Hilfe ihrer Lagerzapfen 11 exzentrisch in den Seitenteilen 13 und 14 der Klingenhalteraufhängung 1 gelagert. In den Lagern 12 der Halteleiste ist die Welle dagegen zentrisch geführt. Die beiden Lagerzapfen 11 der Welle 9 weisen einen geringeren Durchmesser auf als die übrige Welle. Der Abschnitt großen Durchmessers der Welle ist kürzer als der Abstand der beiden Seitenteile 13 und 14 der Klingenhalteraufhängung. Dies erlaubt ein Verschieben der Welle in axialer Richtung. In den Lagern 12 der Halteleiste sind Ausnehmungen 15 vorgesehen. In einer ersten Einstellung, welche in Figur 1 nicht erkennbar ist, wird die Welle 9 axial so weit nach links verschoben, daß der Hebel 10 zur Betätigung der Welle in die Ausnehmung 15 eingreift. Wird die Welle 9 nunmehr mit Hilfe des Hebels rotiert, so kann die Halteleiste 6 vom Klingenbalken 3 abgehoben und auf diesen wieder abgesenkt werden. Diese Einstellung gestattet das Auswechseln der Klinge und das Reinigen der Zwischenräume. In einer zweiten Einstellung wird die Welle 9 axial so weit verschoben, daß der Hebel 10 nicht mehr in die Ausnehmung 15 eingreift. Diese Position ist in Figur 1 dargestellt. In dieser Einstellung der Welle ist die Halteleiste 6 auf den Klingenbalken abgesenkt. Wird nun die Welle 9 mit Hilfe des Hebels 10 rotiert, so werden Klingenbalken 3 und Halteleiste 6 aufgrund der exzentrischen Lagerung der Welle in den Seitenteilen 13 und 14 der Klingenhalteraufhängung gegeneinander verspannt. Dabei gleiten die einander zugewandten Oberflächen der Halteleiste 6 und des Klingenbalkens 3 aufeinander.

Wie in den Figuren 3 und 4 erkennbar, weisen der Klingenbalken 3 und die Halteleiste 6 jeweils einen schwalbenschwanzartigen Absatz 17 und 18 an den einander zugewandten Oberflächen auf. Der schwalbenschwanzartige Absatz ist durch eine Stufe in den beiden Oberflächen gebildet, bei dem die Fläche 19 bzw. 20 mit den Oberflächenteilen 21 und 22 bzw. 23 und 24 jeweils einen spitzen Winkel α einschließt. Dadurch entsteht ein Keil. Dieses Detail ist zur Verdeutlichung in Figur 6 dargestellt. Die Klinge befindet sich vor den beiden schwalbenschwanzförmigen Absätzen 17 und 18. In den Bereichen der als Anschlag für die Klinge dienenden Scheiben 7 sind die schwalbenschwanzförmigen Absätze unterbrochen. Dies kann Figur 4 entnommen werden. Die Darstellung in Figur 5 zeigt, daß die Klinge 5 mit ihrer Schnittkante 25 über den Klingenbalken 3 und die Halteleiste 6 hinausragt.

Zum Festspannen einer Klinge 5 wird die Halteleiste 6 mit Hilfe des in die Ausnehmungen 15 eingerasteten Hebels 10 angehoben und die Klinge 5 an die Scheiben 7 auf dem Klingenbalken 3 aufgelegt. Anschließend wird die Halteleiste 6 mit Hilfe des immer noch in die Ausnehmungen 15 eingerasteten Hebels 10 auf dem Klingenbalken 3 abgesenkt. Dann wird die Welle 9 axial verschoben, so daß der Hebel 10 nicht mehr in die Ausnehmung 15 eingreift. Anschließend wird die Welle mit Hilfe des Hebels rotiert, was aufgrund der exzentrischen Lagerung der Welle 9 dazu führt, daß sich die Halteleiste 6 bzgl. des Klingenbalkens 3 verschiebt. Die Verschiebung erfolgt senkrecht zu den schwalbenschwanzförmigen Absätzen 17 und 18. Bei dieser Verschiebung gleiten die einander zugewandten Oberflächen von Klingenbalken 3 und Halteleiste 6 relativ zueinander. Dabei greift der schwalbenschwanzförmige Absatz 18 der Halteleiste in den schwalbenschwanzförmigen Absatz des Klingenbalkens wie ein Keil ein. Dies führt dazu, daß die einander zugewandten Oberflächen von Klingenbalken 3 und Halteleiste 6 gegeneinander verspannt werden. Durch die dabei wirkende Kraft wird die Klinge zwischen dem Klingenbalken 3 und der Halteleiste 6 eingespannt. Die Kraft ist über die gesamte Breite des Klingenbalkens gleich.

### Bezugszahlenliste

- 1: Klingenhalteraufhängung
- 2: Zapfen
- 3: Klingenbalken
- 4: Schraube
- 5: Klinge
- 6: Halteleiste
- 7: Scheibe
- 8: Spannvorrichtung
- 9: Welle
- 10: Hebel
- 11: Zapfen
- 12: Lager in der Halteleiste
- 13: Seitenteil der Klingenhalteraufhängung
- 14: Seitenteil der Klingenhalterauthängung
- 15: Ausnehmung
- 16: -
- 17: schwalbenschwanzförmiger Absatz des Klingenbalkens
- 18: schwalbenschwanzförmiger Absatz der Halteleiste
- 19: Fläche des Absatzes des Klingenbalkens
- 20: Fläche des Absatzes der Halteleiste
- 21: Bereich der Oberfläche des Klingenbalkens
- 22: Bereich der Oberfläche des Klingenbalkens
- 23: Bereich der Oberfläche der Halteleiste
- 24: Bereich der Oberfläche der Halteleiste
- 25: Schneidkante

## Patentansprüche

1. Klingenhaltevorrichtung zur Halterung von länglichen, flachen Klingen mit einer Schneidkante, insbesondere für Abschwartungs- und Enthäutungsmaschinen
mit einer Klingenhalteraufhängung (1) zur Befestigung der Klingenhaltevorrichtung an einer weiteren Vorrichtung, insbesondere an einer Abschwartungs- und Enthäutungsmaschine,
mit einem an der Klingenhalteraufhängung (1) befestigten Klingenbalken (3), an welchem die Klinge (5) entlang eines Teiles ihrer Oberfläche anliegt,
mit einer teilweise an dem Klingenbalken (3) und teilweise an der Klinge (5) anliegenden Halteleiste (6) zum Befestigen der Klinge an dem Klingenbalken und
mit einer Spannvorrichtung (8) zum Zusammenspannen von Klingenbalken (3) und Halteleiste(6),
**dadurch gekennzeichnet,**
**daß** der Klingenbalken (3) an der der Halteleiste (6) zugewandten Oberfläche (21, 22) einen ersten schwalbenschwanzartigen Absatz (17) über seine gesamte Breite aufweist,
**daß** die Halteleiste (6) an der dem Klingenbalken (3) zugewandten Oberfläche (23, 24) einen zweiten schwalbenschwanzartigen Absatz (18) über ihre gesamte Breite aufweist, welcher in den ersten schwalbenschwanzartigen Absatz (17) keilartig eingreift,
**daß** als Spannvorrichtung (8) eine an der Klingenhalteraufhängung exzentrisch gelagerte und in der Halteleiste zentrisch gelagerte Welle (9) vorgesehen ist, welche durch eine Betätigungsvorrichtung (10) zur Rotation angetrieben werden kann.

2. Klingenhaltevorrichtung nach Anspruch 1, **dadurch gekennzeichnet, daß** als Betätigungsvorrichtung an der Welle ein Hebel (10) vorgesehen ist.

3. Klingenhaltevorrichtung nach Anspruch 2, **dadurch gekennzeichnet, daß** die Welle (9) in der Klingenhalteraufhängung (1) achsial verschiebbar gelagert ist, und daß das Lager (12) an der Halteleiste (6) für die Welle (9) eine Ausnehmung (15) zum Einhängen des Hebels (10) aufweist.

4. Klingenhaltevorrichtung nach einem der vorhergehenden Ansprüche, **dadurch gekennzeichnet, daß** an dem Klingenbalken ein Anschlag für die Klinge vorgesehen ist.

5. Klingenhaltevorrichtung nach Anspruch 4, **dadurch gekennzeichnet, daß** der Anschlag variabel ist.

## Claims

1. Blade mounting device for the mounting of long, flat blades with a cutting edge, particularly for flaying and skinning machines,
with a blade mounting support (1) for attaching the blade mounting device to a further device, particularly to a flaying and skinning machine;
with a blade bar (3) attached to the blade mounting support (1) and the blade (5) lying along part of its surface against the blade bar,
with a retaining strip (6) for attaching the blade to the blade bar and lying partly against the blade bar (3) and partly against the blade (5), and
with a clamping device (8) for clamping the blade bar (3) and retaining strip (6) together,
**characterised in that**
the blade bar (3) has a first dovetail shoulder (17) across its entire width on the surface (21, 22) facing the retaining strip (6),
the retaining strip (6) on the surface (23, 24) facing the blade bar (3) has, across its entire width, a second dovetail shoulder (18) which wedges into the first dovetail shoulder (17),
a shaft (9) mounted eccentrically on the blade mounting support and mounted centrically in the retaining strip and which can be driven for rotation by an actuating device (10) is provided as a clamping device (8).

2. Blade mounting device according to claim 1, **characterised in that** a lever (10) is provided on the shaft as an actuating device.

3. Blade mounting device according to claim 2, **characterised in that** the shaft (9) is axially movably located in the blade mounting support (1) and that the bearing (12) on the retaining strip (6) for the shaft (9) has a recess (15) for insertion of the lever (10).

4. Blade mounting device according to one of the previous claims, **characterised in that** a stop for the blade is fitted on the blade bar.

5. Blade mounting device according to claim four, **characterised in that** the stop is variable.

## Revendications

1. Dispositif de support d'outil de coupe pour supporter de longues lames plates avec une arête centrale, en particulier pour les machines à enlever la couenne et la peau
avec une suspension de support d'outil de coupe (1) pour fixer la suspension du dispositif de support d'outil de coupe sur un autre dispositif, en particulier sur une machine à enlever la couenne et la peau,
avec, fixé sur la suspension de support d'outil de coupe (1), un barreau de lame (3) contre lequel la lame (5) repose le long d'une partie de sa surface,
avec une baguette de maintien (6) reposant en partie contre le barreau de lame (3) et en partie contre la lame (5) destinée à fixer la lame sur le barreau de lame et
avec un dispositif de serrage (8) pour serrer ensemble le barreau de lame (3) et la baguette de maintien (6),
**caractérisé en ce que** :
le barreau de lame (3), sur la surface (21, 22) tournée vers la baguette de maintien (6), présente un premier talon en forme de queue d'aronde (17) sur toute sa largeur,
la baguette de maintien (6), sur la surface (23, 24) tournée vers le barreau de lame (3), présente un deuxième talon en forme de queue d'aronde (18) sur toute sa largeur, qui glisse comme un coin dans le premier talon en forme de queue d'aronde (17),
un arbre à paliers excentriques contre la suspension de support d'outil de coupe et à paliers centriques (9) dans la baguette de maintien, arbre dont la rotation peut être déclenchée par un dispositif d'actionnement (10) est prévu en guise de dispositif de serrage (8).

2. Dispositif de support d'outil de coupe selon la revendication 1, **caractérisée en ce qu'**un levier (10) est prévu en guise de dispositif d'actionnement contre l'arbre.

3. Dispositif de support d'outil de coupe selon la revendication 2, **caractérisée en ce que** l'arbre (9) tourne sur paliers en se déplaçant dans le sens axial dans la suspension de support d'outil de coupe (1) et que le palier (12) de la baguette de maintien (6) présente, pour l'arbre (9), un creux (15) permettant d'accrocher le levier (10).

4. Dispositif de support d'outil de coupe selon l'une des revendications précédentes, **caractérisée en ce qu'**une butée pour la lame est prévue sur le barreau de lame.

5. Dispositif de support d'outil de coupe selon la revendication 4, **caractérisée en ce que** la butée est variable.
